Europäisches Patentamt

European Patent Office

Office européen des brevets

(19)

(11) Numéro de publication: **0 031 749**
**B1**

(12) **FASCICULE DE BREVET EUROPEEN**

(45) Date de publication du fascicule du brevet: **13.04.83**

(51) Int. Cl.³: **C 09 K 3/14, C 01 F 17/00**

(21) Numéro de dépôt: **80401773.9**

(22) Date de dépôt: **10.12.80**

(54) **Procédé de fabrication de compositions de polissage.**

(30) Priorité: **27.12.79 FR 7931742**

(43) Date de publication de la demande:
**08.07.81 Bulletin 81/27**

(45) Mention de la délivrance du brevet:
**13.04.83 Bulletin 83/15**

(84) Etats contractants désignés:
**AT BE CH DE FR GB IT LI NL SE**

(56) Documents cités:
**DE - A - 2 145 820**
**FR - A - 1 263 505**
**FR - A - 2 416 867**
**US - A - 3 262 766**
**US - A - 3 768 989**
**CHEMICAL ABSTRACTS, vol. 93, no. 4, 24 juillet 1980, page 266, abrégé 30807f COLUMBUS, Ohio (US)**

Le dossier contient des informations techniques présentées postérieurement au dépôt de la demande et ne figurant pas dans le présent fascicule.

(73) Titulaire: **RHONE-POULENC SPECIALITES CHIMIQUES**
**"Les Miroirs" 18, Avenue d'Alsace**
**F-92400 Courbevoie (FR)**

(72) Inventeur: **Khaladji, Jean**
**86, rue Vieille du Temple**
**F-75003 Paris (FR)**
Inventeur: **Peltier, Marcel**
**273, avenue Carnot**
**F-17000 La Rochelle (FR)**

(74) Mandataire: **Savina, Jacques et al,**
**RHONE-POULENC RECHERCHES Service Brevets Chimie et Polymères 25, Quai Paul Doumer**
**F-92408 Courbevoie Cedex (FR)**

Courier Press, Leamington Spa, England.

Procédé de fabrication de compositions de polissage

La présente invention concerne un procédé de fabrication de compositions de polissage, les compositions obtenues et leurs applications au polissage du verre ou des matières du même genre. Elle a plus particulièrement trait à un procédé continu de fabrication de compositions de polissage à base de terres rares.

Parmi les compositions de polissage utilisées actuellement dans l'industrie du verre, celles à base de terres rares, et, en particulier, de cérium s'avèrent généralement les plus performantes. On connaît divers procédés de fabrication de telles compositions. Ainsi, il a été proposé selon FR—A—2 426 110 de précipiter par l'hydroxyde de sodium une solution aqueuse de sulfate de terres rares en présence de molochite, de filtrer, laver, sécher et calciner le produit résultant pour obtenir la composition de polissage désirée. Un tel procédé ne permet pas d'obtenir des compositions de polissage présentant une efficacité entièrement satisfaisante en raison notamment de l'hétérogénéité, de la structure non définie et de la non reproductibilité des produits obtenus. Ces inconvénients proviennent notamment des conditions opératoires du procédé selon lesquelles la concentration des réactifs évolue au cours de la réaction et ne permet pas d'obtenir des produits définis de façon reproductible; ils proviennent également de l'existence de composés étrangers (molochite) et de la présence de sulfates dont la précipitation par l'hydroxyde de sodium donne des mélanges de produits complexes tels que les sulfates doubles, hydroxysulfates et hydroxydes dont la quantité et la nature peuvent varier au cours de la réaction.

Il a également été proposé (Chemical Abstracts *80*, 51688, 1974) de fabriquer des compositions de polissage à base de cérium en précipitant de l'hydroxyde cérique par de l'ammoniaque sur une solution de nitrate de terre rare dans laquelle le cérium a été préalablement oxydé. Un tel procédé nécessite une étape supplémentaire de purification par recristallisation par le nitrate céri-ammonique et une reprise de l'oxyde calciné par un acide dilué; les produits obtenus ne possèdent pas une efficacité polissante satisfaisante. Par ailleurs, de telles compositions ne présentent pas des qualités d'homogénéité, de structure et de reproductibilité satisfaisantes.

On connaît, d'après US—A—3 768 989, un procédé de préparation de compositions de polissage par formation d'un précipité de carbonate de terres rares-wollastonite séparation du précipité et calcination. On connaît également d'après US—A—3 262 766 des compositions de polissage fabriquées par traitement de solutions de carbonates de terres rares du commerce avec de l'acide fluosilicique ou hydrofluosilicique. Les compositions de polissage préparées selon les procédés décrits dans ces deux brevets américains présentent des inconvénients analogues à ceux qui ont été décrits ci-dessus pour les compositions du FR—A—2 426 110.

La demanderesse a découvert un procédé qui permet de remédier aux inconvénients précités et qui permet notamment de fabriquer des compositions de polissage directement utilisables, présentant une efficacité et des qualités considérablement améliorées par rapport aux compositions de polissage décrites dans l'art antérieur.

Les compositions de l'invention s'avèrent présenter de nombreux avantages par rapport aux produits connus. C'est ainsi qu'outre les qualités d'homogénéité, de reproductibilité des caractéristiques et de définition des produits améliorés; les compositions selon l'invention présentent un aspect amélioré; finesse, granulométrie, couleur; elles présentent également des propriétés améliorées: densité, tenue en suspension et des performances améliorées: efficacité polissante, rapidité de polissage, faible taux de rebut des pièces polies, etc.

La présente invention concerne un effet un procédé de fabrication de compositions de polissage, caractérisé en ce qu'il comporte les étapes suivantes:

a) on mélange simultanément, en continu, une solution de sel de cérium, une solution basique et une solution d'au moins un acide et/ou un sel dont le ou les anions sont susceptibles de former des composés insolubles de terres rares, le nombre d'équivalents basiques mis en oeuvre étant supérieur ou égal au nombre d'équivalents cérium et le pH du milieu réactionnel étant supérieur à 6;

b) on filtre le précipité obtenu;

c) on le sèche;

d) on le calcine.

Le mélange des réactifs selon le procédé de la présente invention est instantané; on obtient une concentration dans les diverses espèces présentes bien définie à chaque instant tout au long de la masse réactionnelle. Ceci permet d'obtenir des compositions homogènes, définies et de caractéristiques stables.

La température du milieu réactionnel doit être comprise, de préférence, entre 10 et 95°C et, plus particulièrement, entre 50 et 70°C.

Le temps de séjour du mélange dans le milieu réactionnel n'est pas un facteur critique selon l'invention et peut varier dans de larges limites; généralement on mettra en oeuvre des temps de séjour compris entre 30 minutes et 2 heures.

La solution de sel de cérium mise en oeuvre selon le procédé de l'invention peut être toute solution aqueuse de sel de cérium à l'état céreux et/ou cérique soluble dans les conditions de l'invention et, notamment, une solution de chlorure céreux ou de nitrate de cérium à l'état céreux ou cérique, ou du mélange des deux.

La pureté du sel de cérium utilisé est indifférente; toutefois, il peut être avantageux de mettre en oeuvre un sel de cérium présentant un degré de pureté supérieur à 99%.

La concentration de la solution de sel de cérium n'est pas un facteur critique, selon l'invention, elle peut varier dans de larges limites; une concentration comprise entre 0,5 et 2 moles par litre est préférée.

Selon une variante préférée du procédé selon l'invention, on introduit le cérium dans le milieu réactionnel à l'état céreux et on l'oxyde à l'état cérique en ajoutant en continu au mélange réactionnel soit isolément, soit en mélange avec une solution autre que celle contenant la base, un agent oxydant compatible avec ce milieu Parmi les agents oxydants pouvant convenir, on peut citer notamment des solutions de perchlorate, de chlorate, d'hypochlorite, de persulfate, d'eau oxygénée ou l'air, l'oxygène, l'ozone. On peut également oxyder le cérium par voie électrochimique. On utilise de préférence l'eau oxygénée.

La proportion d'oxydant par rapport au sel céreux à oxyder peut varier dans de larges limites. Elles est en général supérieure à la stoechiométrie et correspond, de préférence, à un excès compris entre 10 et 40%.

La solution basique mise en oeuvre selon le procédé de l'invention peut être notamment une solution aqueuse d'ammoniaque ou d'hydroxyde de sodium, de potasse ou de carbonate de sodium. Selon l'invention, on met en oeuvre de préférence une solution d'ammoniaque. La normalité de la solution basique mise en oeuvre n'est pas un facteur critique selon l'invention, elle peut varier dans de larges limites, elle sera toutefois avantageusement comprise entre 1 et 5 N.

La proportion entre la solution basique et la solution de sel de cérium doit être telle que le nombre d'équivalents basiques introduits soit supérieur ou égal au nombre d'équivalents cérium introduits dans le même temps. Il peut être avantageux de mettre en oeuvre un excès supérieur à 5% d'équivalents basiques par rapport aux équivalents cérium. Le pH du milieu réactionnel qui doit être alors supérieur à 6, ne doit toutefois pas dépasser environ 10. Il est avantageusement compris entre 7 et 9. Il peut être particulièrement avantageux de régler le pH dans ces limites à une valeur constante à ± 0,1 unité de pH.

La solution d'au moins un acide et/ou un sel dont le ou les anions sont susceptibles de former des composés insolubles de terres rares selon l'invention peut être notamment toute solution aqueuse d'acide et/ou de sel dont l'anion est choisi parmi le groupe constitué par au moins un des anions suivants: oxalate, fluorure, carbonate, borate, silicate, sulfate, phosphate. Le ou les sels mis en oeuvre sont ceux solubles dans l'eau et, de préférence, les sels d'ammonium, de sodium, de potassium. Cette solution est introduite dans le milieu réactionnel isolément ou en mélange avec la solution basique.

Selon le procédé de l'invention, on utilise de préférence des sels, en particulier, ceux dont l'anion est en fluorure, un sulfate, un borate ou un phosphate.

La concentration de la solution d'acide et/ou de sel n'est pas un facteur critique selon l'invention et elle peut varier dans de larges limites; elle est toutefois de préférence inférieure à 6 moles par litre, et, plus particulièrement, comprise entre 2 et 4 moles par litre.

Selon une variante du procédé selon l'invention, on peut en outre ajouter en continu au mélange réactionnel soit isolément, soit en mélange avec la solution de sel de cérium, une solution aqueuse de sel d'au moins une terre rare trivalente contenant éventuellement l'yttrium et soluble dans les conditions de l'invention. Parmi les sels convenant bien, on citera notamment les chlorures ou les nitrates de lanthane, praséodyme, néodyme, samarium, europium, gadolinium, terbium, dysprosium, holmium, erbium, thullium, ytterbium, lutécium, d'yttrium. En particulier, on peut mettre en oeuvre une solution contenant le sel de cérium et des sels de terres rares et qui proviendrait directement ou indirectement du traitement des minerais de terres rares.

La concentration de la solution de sel(s) de terre(s) rare(s) mise en oeuvre selon cette variante du procédé de l'invention n'est pas un facteur critique et elle peut varier dans de larges limites; elle est toutefois, de préférence, comprise entre 0,2 et 1 mole par litre.

Dans le procédé de l'invention le nombre d'équivalents anioniques mis en oeuvre est supérieur ou égal au nombre d'équivalents cationiques mis en oeuvre; il ne doit toutefois pas conduire à la formation de composés d'adsorption sur la composition obtenue par le mélange des réactifs.

Selon une autre variante du procédé selon l'invention, la masse réactionnelle peut être mûrie pendant un certain temps à une température comprise entre 10 et 95°C et, de préférence entre 50 et 80°C avant l'opération de filtration. Dans ce cas, le temps de mûrissement n'est pas un facteur critique selon l'invention et peut varier dans de larges limites; toutefois, un temps pouvant aller jusqu'à 2 heures est généralement satisfaisant.

Selon le procédé de l'invention, on filtre après réaction la masse réactionnelle qui se présente sous le forme d'une suspension. Cette opération de filtration est effectuée éventuellement en continu à une température comprise entre 10 et 90°c et, de préférence, entre 35 et 45°C.

Selon une variante du procédé de l'invention, le gâteau de filtration peut être ensuite lavé avec de l'eau ou une solution d'une sel d'ammonium. Après ce lavage, la teneur en eau du gâteau est comprise entre 20 et 80% en poids et, généralement, entre 30 et 50%.

Le produit obtenu après filtration et éventuellement lavage est ensuite séché éventuellement en continu. La température de séchage est comprise de préférence entre 100 et 600°C, le temps de séchage variant dans ces conditions de préférence entre 30 minutes et 2 heures.

Le produit sec est ensuite calciné éventuellement en continu à une température comprise entre 600 et 1200°C pendant un temps généralement compris entre 30 minutes et 10 heures.

Les opérations de séchage et de calcination peuvent être effectuées dans deux appareils distincts ou s'enchaîner dans un seul appareil.

Les compositions obtenues selon le procédé de l'invention sont applicables au polissage du verre ou des matières du même genre, après éventuellement un broyage et une sélection granulométrique selon les techniques bien connues de l'homme de l'art.

Les compositions de l'invention s'avèrent présenter de nombreux avantages par rapport aux produits connus. C'est ainsi qu'outre les qualités d'homogénéité, de reproducibilité des caractéristiques et de définition des produits améliorés: les compositions selon l'invention présentent un aspect amélioré: finesse, granulométrie, couleur; elles présentent également des propriétés améliorées: densité, tenue en suspension, et des performances améliorées: efficacité polissante, rapidité de polissage, faible taux de rebut des pièces polies, etc.

Ces avantages apparaîtront notamment à la lecture des exemples qui vont suivre et qui illustrent le procédé de l'invention.

dans ces exemples, les produits ont été préparés dans l'appareillage comprenant les éléments suivants:

— un réacteur agité et thermorégulé de 1,2 l;

— une unité de régulation de pH placée à la sortie du réacteur mesurant le pH dans le réacteur et agissant sur le débit de solution aqueuse basique;

— un "mûrisseur" agité et thermorégulé de 1,2 l;

— une batterie de filtres type Buchner;

— un four rotatif de séchage, calcination.

Les caractéristiques des produits ont été déterminées par les méthodes suivantes:

1. Granulométrie: Tamisage sur tamis métallique sous courant d'eau, la poudre ayant été préalablement délitée deux fois cinq minutes aux ultra-sons, en suspension aqueuse.

2. Densité apparente tassé.

Méthode normalisée DIN 53.194.

3. Tenue en suspension:

Une suspension à 50 g/l est mise à décanter dans une éprouvette de 250 ml (diamètre 38 mm) dans laquelle plonge un densimètre. On mesure au cours du temps, la densité de la suspension au niveau du bulbe pendant que la poudre décante. Le T50 est le temps au but duquel la valeur mesurée est la moyenne entre la densité initiale et la densité finale de la liqueur claire.

4. Efficacités polissantes:

Machine de contrôle, norme DIN 58 750.
Verre Crown blanc.
Polissoir: rilsan Hyprez "Lan-Plan"-$\emptyset = 94$ mm
Pression: 665 g/cm³.
Vitesse de rotation du polissoir: 100 t/mn
Concentration de la suspension: 125 g/l
Température de la suspension: 25°C

5. Structure cristaline:

Méthode de Debye et Scherrer en transmission; rayonnement monochromatique du molybdène.

### Exemple 1

a) On introduit simultanément en continu dans le réacteur:

— une solution aqueuse contenant 1 mole/litre de nitrate céreux;

— une solution d'ammoniaque 2 N renfermant en outre 0,05 mole de sulfate d'ammonium par litre et 0,05 mole de fluorure d'ammonium par litre.

Le débit de ces solutions est tel que l'unité de régularisation de pH est réglée sur pH = 8,9 ± 0,1.

Le réacteur fonctionne à 25°C et le mûrisseur à 75°C, le temps de séjour dans chaque appareil est de 1 heure.

b) On filtre le précipité obtenu, puis on le lave à l'eau.

c) On le sèche.

d) Puis on le calcine 3 heures à 840°C.

Après broyage et sélection, on obtient une composition de polissage dont les caractéristiques sont les suivantes:

— granulométrie: refus au tamis de 15µm inférieur à 0,1%;

— couleur: blanc invoire;

— densité apparente tassé: 1,8;

— tenue en suspension $T_{50}$ = 1,4 mn;

— Efficacité polissante: 27 mg/dm²/mn;

— Structure: cubique F dominante.

### Exemple 2

a) On introduit simultanément en continu dans le réacteur:

— une solution aqueuse contenant 1 mole de nitrate cérique par litre et 0,6 mole d'acide nitrique libre par litre;

— une solution d'ammoniaque 3 N renfermant en outre 0,10 mole de fluorure d'ammonium par litre et 0,05 mole de sulfate d'ammonium par litre.

Le débit de ces solutions est tel que l'unité de régulation de pH est réglée sur pH = 7,5 ± 0,1.

Le réacteur fonctionne à 50°C et le mûrisseur à 80°C, le temps de séjour dans chaque appareil est de 1 heure.

b) On filtre le précipité obtenu, puis on le lave à l'eau.

c) On le sèche.

d) Puis on le calcine 1 heure à 1000°C.

Après broyage et sélection, on obtient une composition de polissage dont les caractéristiques sont les suivantes:

— granulométrie: refus au tamis de 15 $\mu$m inférieur à 0,1%;

— couleur: blanc ivoire;

— densité apparente tassé: 1,8;

— tenue en suspension $T_{50}$ = 1,5 mn;

— efficacité polissante: 25 mg/dm²/mn;

— structure: cubique F dominante.

### Exemple 3

a) On introduit simultanément en continu dans le réacteur:

— une solution aqueuse contenant 1 mole de nitrate de cérium par litre;

— une solution d'eau oxygénée 6 N;

— une solution d'ammoniaque 5 N;

— une solution aqueuse contenant 1 mole de fluorure d'ammonium par litre et 0,08 mole de phosphate trisodique par litre;

— une solution aqueuse contenant 1 mole de nitrate de néodyme par litre.

Le débit de ces solutions est tel que l'unité de régulation de pH est réglée sur pH = 7 $\pm$ 0,1 et que le débit de la solution de nitrate de néodyme est 34% du débit de la solution de nitrate de cérium.

Le réacteur fonctionne à 50°C et le mûrisseur à 80°C, le temps de séjour dans chaque appareil est de 1 heure.

b) On filtre le précipité obtenu, puis on le lave à l'eau.

c) On le sèche.

d) Puis on le calcine 1 heure à 850°C.

Après broyage et sélection, on obtient une composition de polissage dont les caractéristiques sont les suivantes:

— granulométrie: refus au tamis de 15 $\mu$m inférieur à 0,1%;

— couleur: crème;

— densité apparente tassé: 1,7:

— tenue en suspension $T_{50}$ = 2,7 mn;

— efficacité polissante: 25 mg/dm²/mn;

— structure: cristallites de structure cubique F, liées par une phase de structure type monazite.

### Exemple 4

On opère dans les mêmes conditions que celles décrites à l'exemple 3 en faisant uniquement varier la durée et la température de calcination.

Dans le cas où l'on calcine 30 minutes à 850°C, la composition de polissage présente les caractéristiques suivantes:

— couleur: crème;

— densité apparente tassé: 1,5;

— tenue en suspension $T_{50}$ = 2,7 mn;

— efficacité polissante: 25 mg/dm²/mn;

### Exemple 5

a) On introduit simultanément en continu dans le réacteur:

— une solution aqueuse contenant 0,45 mole de nitrate de cérium par litre et 0,55 mole de nitrate de néodyme par litre et 0,28 mole d'eau oxygénée par litre;

— une solution aqueuse contenant 1,33 mole d'ammoniaque, 0,34 mole de fluorure d'ammonium par litre et 0,25 mole de phosphate trisodique par litre.

Le débit de ses solutions est tel que l'unité de régulation de pH est réglée sur pH = 7 $\pm$ 0,1.

Le réacteur fonctionne à 50°C et le mûrisseur à 75°C, le temps de séjour dans chaque appareil est de 1 heure.

b) On filtre le précipité obtenu, puis on le lave à l'eau.

c) On le sèche.

d) Puis on le calcine 1 heure à 800°C.

On obtient une composition de polissage dont les caractéristiques sont les suivantes:

— couleur: rose;

— densité apparente tassé: 1,55;

— tenue en suspension $T_{50}$ = 3,7 mn;

— efficacité polissante: 23 mg/dm²/mn;

— structure: cristallites de structure cubique F, liées par une phase de structure type monazite. Phase amorphe intermédiaire visible.

### Exemple 6

a) On introduit simultanément en continu dans le réacteur:

— une solution aqueuse contenant 0,35 mole de chlorure de cérium par litre, 0,24 mole d'eau oxygénée par litre et 0,45 mole de nitrate de lanthane par litre et 0,20 mole de chlorure de néodyme par litre;

— une solution aqueuse contenant 1,12 mole d'ammoniaque par litre, 0,29 mole de fluorure d'ammonium par litre et 0,21 mole de phosphate d'ammonium par litre.

Le débit de ces solutions est tel que l'unité de régulation de pH est réglée sur pH = 7,7 $\pm$ 0,1.

Le réacteur fonctionne à 50°C et le mûrisseur à 75°C, le temps de séjour dans chaque appareil est de 1 heure.

b) On filtre le précipité obtenu, puis on le lave à l'eau.

c) On le sèche.

d) Puis on le calcine 2 heures à 950°C.

On obtient une composition de polissage ayant les caractéristiques suivantes:

— couleur: rose pâle;

— densité apparente tassé: 1,35;

— efficacité polissante: 23 mg/dm²/mn;

### Exemple 7

a) On introduit simultanément en continu dans le réacteur:

— une solution aqueuse contenant 0,75 mole de nitrate de cérium par litre, 0,41 mole d'eau oxygénée par litre, et 0,25 mole de nitrate de néodyme par litre;

— une solution aqueuse contenant 2,3 mole d'ammoniaque par litre, 0,5 mole de fluoborate d'ammonium par litre.

Le débit de ces solutions est tel que l'unité de régulation de pH est réglée sur pH = 7 ± 0,1.

Le réacteur fonctionne à 50°C et le mûrisseur à 75°C, le temps de séjour dans chaque appareil est de 1 heure.

b) On filtre le précipité obtenu, puis on le lave à l'eau.

c) On le sèche.

d) Puis on le calcine 2 heures à 950°C.

Après broyage et sélection, on obtient une composition de polissage dont les caractéristiques sont les suivantes:
— granulométrie: refus au tamis de 15 $\mu$m inférieur à 0,1%;
— couleur: chamois;
— densité apparente tassé: 1,8:
— tenue en suspension $T_{50}$: 2 mn;
— efficacité polissante: 24 mg/dm²/mn;
— structure: cristallites de structure cubique F, liées par une phase amorphe.

### Exemple 8

a) On introduit simultanément en continu dans le réacteur:
— une solution aqueuse contenant 0,5 Mole de chlorure de cérium par litre, 0,28 mole d'eau oxygénée par litre, 0,25 mole de chlorure de lanthane par litre, 0,20 mole de chlorure de néodyme par litre et 0,05 mole de chlorure de praséodyme par litre;
— une solution aqueuse contenant 0,72 mole de fluorure d'ammonium par litre et 0,53 mole de phosphate d'ammonium par litre;
— une solution d'ammoniaque 2,5 N.

Le débit de ces solutions est tel que l'unité de régulation de pH est réglée sur pH = 7 ± 0,1.

Le réacteur fonctionne à 50°C et le mûrisseur à 75°C, le temps de séjour dans chaque appareil est de 1 heure.

b) On filtre le précipité obtenu, puis on le lave à l'eau.

c) On le sèche.

d) Puis on le calcine 1 heure à 900°C.

Après broyage et sélection, on obtient une composition de polissage dont les caractéristiques sont les suivantes:
— granulométrie: refus au tamis de 15 $\mu$m inférieur à 0,1%;
— couleur: rosée;
— densité apparente tassé: 1,55;
— tenue en suspension $T_{50}$: 2,7 mn;
— efficacité polissante: 23 mg/dm²/mn;
— structure: cristallites de structure cubique F, liées par une phase de structure type monazite.

### Exemple 9

On opère dans les mêmes conditions que celles décrites à l'exemple 8 avec pour seule différence de régler l'unité de régulation du pH sur différentes valeurs:

1) pH réglé sur 6,5 ± 0,1:
Les caractéristiques de la composition de polissage obtenue sont les suivantes:
— granulométrie: refus au tamis de 15 $\mu$m inférieur à 0,1%;
— couleur: rosée;
— densité apparente tassé: 1,3;
— efficacité polissante: 25 mg/dm²/mn;
— structure: identique à celle du composé obtenu à l'exemple 8.

2) pH réglé sur 7,8 ± 0,1:
Les caractéristiques de la composition de polissage obtenue sont les suivantes:
— granulométrie: refus au tamis de 15 $\mu$m inférieur à 0,1%;
— couleur: rosée;
— densité apparente tassé: 1,35;
— efficacité polissante: 25 mg/dm²/mn;
— structure: identique à celle du composé obtenu à l'exemple 8.

3) pH réglé sur 5,6 ± 0,1:
Les caractéristiques de la composition de polissage obtenue sont les suivantes:
— granulométrie: refus au tamis de 15 $\mu$m inférieur à 0,1%;
— couleur: rosée;
— densité apparente tassé: 1,7:
— efficacité polissante: 20 mg/dm²/mn;
— structure: identique à celle du composé obtenu à l'exemple 8, mais avec une phase monazite moins abondante.

### Exemple 10

On introduit simultanément en continu dans le réacteur:
— une solution aqueuse contenant 1,4 mole de chlorure de cérium par litre;
— une solution d'eau oxygénée 6 N;
— une solution aqueuse contenant 0,6 mole de chlorure de lanthane par litre;
— une solution aqueuse contenant 2,15 mole de fluorure d'ammonium par litre et 0,35 Mole de phosphate d'ammonium par litre;
— une solution d'ammoniaque 2,4 N.

Le débit de ces solutions est tel que l'unité de régulation de pH est réglée sur pH = 7,7 ± 0,1.

Le réacteur fonctionne à 50°C et le mûrisseur à 75°C, le temps de séjour dans chaque appareil est de 1 heure.

b) On filtre de précipité obtenu, puis on le lave.

c) On le sèche.

d) Puis on le calcine 1 heure à 975°C.

Après broyage et sélection, on obtient une composition de polissage dont les caractéristiques sont les suivantes:
— granulométrie: refus au tamis de 15 $\mu$m inférieur à 0,1%;
— couleur: crème clair;
— densité apparente tassé: 1,7;
— efficacité polissante: 27 mg/dm²/mn;
— structure: analogue à celle du produit obtenu à l'exemple 3.

## Revendications

1. Procédé de fabrication de compositions de polissage, caractérisé en ce qu'il comporte les étapes suivantes:

a) on mélange simultanément, en continu, une solution de sel de cérium, une solution basique et une solution d'au moins un acide et/ou un sel dont le ou les anions sont susceptibles de former des composés insolubles de terres rares, le nombre d'équivalents basiques mis en oeuvre étant supérieur ou égal au nombre d'équivalents cérium et le pH du milieu réactionnel étant supérieur à 6;

b) On filtre le précipité obtenu;

c) On le sèche;

d) On le calcine.

2. Procédé selon la revendication 1, caractérisé en ce que la température du milieu réactionnel est comprise entre 10 et 95°C et plus particulièrement entre 50 et 70°C.

3. Procédé selon la revendication 1, caractérisé en ce que le temps de séjour du mélange dans le milieu réactionnel est compris entre 30 minutes et 2 heures.

4. Procédé selon la revendication 1, caractérisé en ce que la solution de sel de cérium est choisie parmi au moins une des solutions suivantes: chlorure céreux, nitrate céreux, nitrate cérique.

5. Procédé selon la revendication 1 ou 4, caractérisé en ce que la concentration de la solution de sel de cérium est comprise entre 0,5 et 2 moles par litre.

6. Procédé selon la revendication 1, caractérisé en ce que l'on introduit le cérium dans le milieu réactionnel à l'état céreux et on l'oxyde à l'état cérique en ajoutant en continu au milieu réactionnel, soit isolément, soit en mélange avec une autre solution, un agent oxydant.

7. Procédé selon la revendication 6, caractérisé en ce que l'agent oxydant est choisi parmi le groupe comportant des solutions de perchlorate, chlorate, d'hypochlorite, de persulfage, d'eau oxygénée ou l'air, l'oxygène, l'ozone, ou l'oxydation électrochimique.

8. Procédé selon la revendication 6, caractérisé en ce que la proportion d'agent oxydant par rapport au sel céreux est en excès de 10 à 40% par rapport à la stoechiométrie.

9. Procédé selon la revendication 1, caractérisé en ce que la solution basique est choisie parmi les solutions suivantes: ammoniaque, hydroxyde de sodium, potasse, carbonate de sodium.

10. Procédé selon la revendication 1 ou 9, caractérisé en ce que la normalité de la solution basique est comprise entre 1 et 5 N.

11. Procédé selon la revendication 1, caractérisé en ce que l'on met en oeuvre un excès supérieur à 5% d'équivalents basiques par rapport aux équivalents cérium.

12. Procédé selon la revendication 1, caractérisé en ce que le pH du milieu réactionnel est compris entre 6 et 10 et, de préférence, entre 7 et 9.

13. Procédé selon la revendication 12, caractérisé en ce que le pH du milieu réactionnel est réglé dans ces limites à une valeur constante à ± 0,1 unité de pH.

14. Procédé selon la revendication 1, caractérisé en ce que la solution d'au moins un acide et/ou sel dont le ou les anions sont susceptibles de former des composés insolubles de terres rares est choisie parmi les solutions aqueuses dont l'anion est choisi parmi le groupe constitué par au moins un des anions suivants: oxalate, fluorure, carbonate, borate, silicate, sulfate, phosphate.

15. Procédé selon la revendication 1 ou 14, caractérisé en ce que le ou les sels mis en oeuvre sont choisis parmi le groupe comportant les sels d'ammonium, de sodium, de potassium.

16. Procédé selon la revendication 1, 14 ou 15 caractérisé en ce que la concentration de la solution d'acide et/ou de sel est inférieure à 6 moles par litre et, plus particulièrement, comprise entre 2 et 4 moles par litre.

17. Procédé selon la revendication 1, caractérisé en ce que l'on apporte en outre au milieu réactionnel en continu, soit isolément, soit en mélange avec une autre solution, une solution aqueuse de sel d'au moins une terre rare trivalente.

18. Procédé selon la revendication 17, caractérisé en ce que la solution aqueuse de sel d'au moins une terre rare trivalente est choisie parmi le groupe comprenant les chlorures ou les nitrates de lanthane, néodyme, praséodyme, samarium, europium, gadolinium, terbium, disprosium, holmium, erbium, thulium, ytterbium, lutécium, yttrium.

19. Procédé selon la revendication 17 ou 18, caractérisé en ce que la concentration de la solution aqueuse de sel de terre rare trivalente est comprise entre 0,2 et 1 mole par litre.

20. Procédé selon la revendication 1, caractérisé en ce que l'on opère le mûrissement de la masse réactionnelle avant l'étape de filtration à une température comprise entre 10 et 95°C, et de préférence entre 50 et 80°C, pendant un temps pouvant aller jusqu'à 2 heures.

21. Procédé selon la revendication 1, caractérisé en ce que l'étape de filtration est opérée, éventuellement en continu, à une température comprise entre 10 et 90°C et, de préférence, entre 35 et 45°C.

22. Procédé selon la revendication 1, caractérisé en ce qu'après l'étape de filtration, on effectue un lavage du gâteau avec de l'eau ou une solution d'un sel d'ammonium, la teneur en eau du gateau est comprise après ce lavage entre 20 et 80% en poids et plus particulièrement entre 30 et 50%.

23. Procédé selon la revendication 1, caractérisé en ce que l'étape de séchage est effectuée, eventuellement en continu, à une température comprise entre 100 et 600°C pendant une durée de 30 minutes à 2 heures.

24. Procédé selon la revendication 1, caractérisé en ce que l'étape de calcination est effectuée, éventuellement en continu, à une température comprise entre 600 et 1200°C pendant une durée de 30 minutes à 10 heures.

25. Procédé selon la revendication 1, caractérisé en ce que l'on opère en outre après l'étape de calcination un broyage et une sélection granulométrique.

## Patentansprüche

1. Verfahren zur Herstellung von Poliermitteln, gekennzeichnet durch die folgenden Stufen:

a) man vermischt gleichzeitig kontinuierlich die Lösung eines Ceriumsalzes, eine basische Lösung und die Lösung wenigstens einer Säure und/oder eines Salzes, dessen Anionen mit den seltenen Erden unlösliche Verbindungen bilden, wobei die eingesetzten basischen Äquivalente größer oder gleich den Cerium-Äquivalenten sind und der pH-Wert des Reaktionsgemisches

b) man filtriert den erhaltenen Niederschlag;

c) man trocknet diesen;

d) man kalziniert ihn.

2. Verfahren nach Anspruch 1, dadurch gekennzeichnet, daß die Temperatur des Reaktionsgemisches zwischen 10 und 95 und insbesondere zwischen 50 und 70°C liegt.

3. Verfahren nach Anspruch 1, dadurch gekennzeichnet, daß die Verweilzeit des Gemisches im Reaktionsgemisch 30 Minuten bis 2 Stunden beträgt.

4. Verfahren nach Anspruch 1, dadurch gekennzeichnet, daß die Lösung des Ceriumsalzes wenigstens aus einer der folgenden Lösungen gewählt ist: Cer(III)chlorid, Cer(III)nitrat, Cer(IV)-nitrat.

5. Verfahren nach Anspruch 1 oder 4, dadurch gekennzeichnet, daß die Konzentration der Cer-Lösung zwischen 0,5 und 2 Mol/l liegt.

6. Verfahren nach Anspruch 1, dadurch gekennzeichnet, daß man das Cer in das Reaktionsgemisch als $Ce^{+3}$ einführt und zum $Ce^{+4}$-Zustand oxydiert, indem man dem Reaktionsgemisch kontinuierlich entweder allein oder im Gemisch mit einer anderen Lösung ein Oxydationsmittel zugibt.

7. Verfahren nach Anspruch 6, dadurch gekennzeichnet, daß das Oxydationsmittel aus der Gruppe der Lösungen von Perchlorat, Chlorat, Hypochlorit, Persulfat, Wasserstoffperoxid oder Luft, Sauerstoff, Ozon oder der elektrochemischen Oxydation gewählt ist.

8. Verfahren nach Anspruch 6, dadurch gekennzeichnet, daß das Oxydationsmittel gegenüber dem Cer(III)-salz in einem Überschuß von 10 bis 40% gegenüber der Stöchiometrie vorliegt.

9. Verfahren nach Anspruch 1, dadurch gekennzeichnet, daß die basische Lösung aus den folgenden Lösungen gewählt wird: Ammoniumhydroxid, Natriumhydroxid, Kaliumhydroxid, Natriumcarbonat.

10. Verfahren nach Anspruch 1 oder 9, dadurch gekennzeichnet, daß die Normalität der basischen Lösung 1 bis 5 N beträgt.

11. Verfahren nach Anspruch 1, dadurch gekennzeichnet, daß man einen Überschuß von mehr als 5% der basischen Äquivalents bezogen auf die Cer-Äquivalente einsetzt.

12. Verfahren nach Anspruch 1, dadurch gekennzeichnet, daß der pH-Wert des Reaktionsgemisches zwischen 6 und 10, vorzugsweise zwischen 7 und 9 liegt.

13. Verfahren nach Anspruch 12, dadurch gekennzeichnet, daß der pH-Wert des Reaktionsgemisches in den Grenzen von ± 0,1 pH-Einheiten konstant gehalten wird.

14. Verfahren nach Anspruch 1, dadurch gekennzeichnet, daß die Lösung wenigstens einer Säure oder eines Salzes, dessen Anionen mit den seltenen Erden unlösliche Verbindungen bilden können, aus den wässrigen Lösungen gewählt werden, deren Anion aus der Gruppe von wenigstens einem der folgenden Anionen gewählt ist: Oxalat, Fluorid, Carbonat, Borat, Silikat, Sulfat, Phosphat.

15. Verfahren nach Anspruch 1 oder 14, dadurch gekennzeichnet, daß das eingesetzte Salz aus der Gruppe der Ammonium-, Natrium- oder Kaliumsalze gewählt ist.

16. Verfahren nach den Ansprüchen 1, 14 oder 15, dadurch gekennzeichnet, daß die Konzentration der Säure und/oder des Salzes unter 6 Mol/l, insbesondere zwischen 2 und 4 Mol/l beträgt.

17. Verfahren nach Anspruch 1, dadurch gekennzeichnet, daß man dem Reaktionsgemisch kontinuierlich, sei es allein, sei es im Gemisch mit einer anderen Lösung, die wässrige Lösung wenigstens eines dreiwertigen Salzes eines Seltenerdmetalls zusetzt.

18. Verfahren nach Anspruch 17, dadurch gekennzeichnet, daß die wässrige Lösung des Salzes eines Seltenerdmetalls aus der Gruppe der Chloride oder Nitrate von Lanthan, Neodym, Praseodym, Samarium, Europium, Gadolinium, Terbium, Disprosium, Holmium, Erbium, Thulium, Ytterbium, Lutecium oder Yttrium gewählt ist.

19. Verfahren nach Anspruch 17 oder 18, dadurch gekennzeichnet, daß die Konzentration der wässrigen Lösung des dreiwertigen Seltenerdmetalls 0,2 bis 1 Mol/l beträgt.

20. Verfahren nach Anspruch 1, dadurch gekennzeichnet, daß man eine Reifung des Reaktionsgemisches vor der Filtration bei einer Temperatur zwischen 10 und 95°C und vorzugsweise zwischen 50 und 80°C für die Dauer des Zeitraumes bis zu 2 Stunden vornimmt.

21. Verfahren nach Anspruch 1, dadurch gekennzeichnet, daß die Filtrationsstufe, gegebenenfalls kontinuierlich, bei einer Temperatur zwischen 10 und 90°C, vorzugsweise zwischen 35 und 45°C durchgeführt wird.

22. Verfahren nach Anspruch 1, dadurch gekennzeichnet, daß man nach der Filtration die Wäsche des Filterkuchens mit Wasser oder mit der Lösung eines Ammoniumsalzes vornimmt, wobei der Wassergehalt des Filterkuchens nach der Wäsche 20 bis 80, vorzugsweise 30 bis 50 Gewichtsprozent beträgt.

23. Verfahren nach Anspruch 1, dadurch gekennzeichnet, daß die Trocknungsstufe, gegebenenfalls kontinuierlich bei einer Temperatur zwischen 100 und 600°C für eine Dauer von 30 Minuten bis 2 Stunden vorgenommen wird.

24. Verfahren nach Anspruch 1, dadurch gekennzeichnet, daß die Calcinierungsstufe, gegebenenfalls kontinuierlich, bei einer Temperatur zwischen 600 und 1200°C für die Dauer von 30 Minuten bis 10 Stunden durchgeführt wird.

25. Verfahren nach Anspruch 1, dadurch gekennzeichnet, daß man nach der Calciniuerungsstufe noch eine Zerkleinerung und eine Auswahl nach der Korngröße vornimmt.

## Claims

1. Process for the manufacture of polishing compositions, characterised in that it comprises the following steps:

a) a cerium salt solution, a basic solution and a solution of at least one acid and/or salt of which the anion or anions are capable of forming insoluble rare earth compounds are mixed simultaneously and continuously, the number of basic equivalents used being greater than or equal to the number of equivalents of cerium, and the pH of the reaction medium being more than 6;

b) the precipitate obtained is filtered off;

c) it is dried; and

d) it is calcined.

2. Process according to Claim 1, characterised in that temperature of the reaction medium is between 10 and 95°C and more particularly between 50 and 70°C.

3. Process according to Claim 1, characterised in that the residence time of the mixture in the reaction medium is between 30 minutes and 2 hours.

4. Process according to Claim 1, characterised in that the cerium salt solution is chosen from amongst at least one of the following solutions: cerous chloride, cerous nitrate and ceric nitrate.

5. Process according to Claim 1 or 4, characterised in that the concentration of the cerium salt solution is between 0.5 and 2 moles per litre.

6. Process according to Claim 1, characterised in that the cerium is introduced into the reaction medium in the cerous state and is oxidised to the ceric state by continuously adding an oxidising agent to the reaction medium, either in isolation or mixed with another solution.

7. Process according to Claim 6, characterised in that the oxidising agent is chosen from amongst the group comprising solutions of perchlorate, chlorate, hypochlorite, persulphate or hydrogen peroxide, or air, oxygen or ozone, or electrochemical oxidation.

8. Process according to Claim 6, characterised in that the proportion of oxidising agent relative to the cerous salt is in an excess of 10 to 40% relative to the stoichiometry.

9. Process according to Claim 1, characterised in that the basic solution is chosen from amongst the following solutions: ammonia, sodium hydroxide, potassium hydroxide and sodium carbonate.

10. Process according to Claim 1 or 9, characterised in that the normality of the basic solution is between 1 and 5 N.

11. Process according to Claim 1, characterised in that an excess of more than 5% of basic equivalents is used, relative to the equivalents of cerium.

12. Process according to Claim 1, characterised in that the pH of the reaction medium is between 6 and 10 and preferably between 7 and 9.

13. Process according to Claim 12, characterised in that the pH of the reaction medium is adjusted with these limits to a value which is constant to within ± 0.1 pH unit.

14. Process according to Claim 1, characterised in that the solution of at least one acid and/or salt of which the anion or anions are capable of forming insoluble rare earth compounds is chosen from amongst aqueous solutions in which the anion is chosen from amongst the group comprising at least one of the following anions: oxalate, fluoride, carbonate, borate, silicate, sulphate and phosphate.

15. Process according to Claim 1 or 14, characterised in that the salt or salts used are chosen from amongst the group comprising ammonium, sodium and potassium salts.

16. Process according to Claims 1, 14 or 15, characterised in that the concentration of the solution of acid and/or salt is less than 6 mols per litre and more particularly between 2 and 4 moles per litre.

17. Process according to Claim 1, characterised in that an aqueous solution of a salt of at least one trivalent rare earth is also introduced into the reaction medium continuously, either in isolation or mixed with another solution.

18. Process according to Claim 17, characterised in that the aqueous solution of a salt of at least one trivalent rare earth is chosen from amongst the group comprising the aqueous solutions of the chlorides or nitrates of lanthanum, neodymium, praseodymium, samarium, europium, gadolinium, terbium, dysprosium, holmium, erbium, thulium, ytterbium, lutecium and yttrium.

19. Process according to Claim 17 or 18, characterised in that the concentration of the aqueous solution of trivalent rare earth salt is between 0.2 and 1 mol per litre.

20. Process according to Claim 1, characterised in that ageing of the reaction mixture is carried out, before the filtration step, at a temperature of between 10 and 25°C and preferably of between 50 and 80°C, for a period which can range up to two hours.

21. Process according to Claim 1, characterised in that the filtration step is carried out, continuously if appropriate, at a temperature of between 10 and 90°C and preferably of between 35 and 45°C.

22. Process according to Claim 1, characterised in that, after the filtration step, the cake is washed with water or a solution of an ammonium salt, the water content of the cake after this washing being between 20 and 80% by weight and more particularly between 30 and 50%.

23. Process according to Claim 1, characterised in that the drying step is carried out, continuously if appropriate, at a temperature of between 100 and 600°C, for a period of 30 minutes to 2 hours.

24. Process according to Claim 1, characterised in that the calcination step is carried out, continuously if appropriate, at a temperature of between 600 and 1,200°C, for a period of 30 minutes to 10 hours.

25. Process according to Claim 1, characterised in that, after the calcination step, grinding and particle size selection are also carried out.